(19) Europäisches Patentamt
European Patent Office
Office européen des brevets

(11) Veröffentlichungsnummer: **0 173 869**
**A1**

(12) # EUROPÄISCHE PATENTANMELDUNG

(21) Anmeldenummer: 85109803.8

(22) Anmeldetag: 05.08.85

(51) Int. Cl.⁴: C 08 L 69/00
C 08 L 51/00, C 08 L 25/04

(30) Priorität: 17.08.84 DE 3430234

(43) Veröffentlichungstag der Anmeldung: 12.03.86 Patentblatt 86/11

(84) Benannte Vertragsstaaten: DE FR GB IT

(71) Anmelder: BAYER AG
Konzernverwaltung RP Patentabteilung
D-5090 Leverkusen 1 Bayerwerk(DE)

(72) Erfinder: Serini, Volker, Dr.
Sebastian-Kneipp-Weg 2
D-4150 Krefeld(DE)

(72) Erfinder: Freitag, Dieter, Dr.
Hasenheide 10
D-4150 Krefeld(DE)

(72) Erfinder: Kauth, Hermann, Dr.
Kolpingstrasse 34
D-4150 Krefeld(DE)

(72) Erfinder: Bier, Peter, Dr.
Bodelschwinghstrasse 18
D-4150 Krefeld 1(DE)

(54) **Flammwidrige, thermoplastische Polymermischungen.**

(57) Gegenstand der vorliegenden Erfindung sind flammwidrige, thermoplastische Polymermischungen, die spezielle, thermoplastische Polycarbonate auf Basis tetraalkylierter Diphenole, spezielle aromatische Phosphatester und gegebenenfalls Tetrafluorethylenpolymerisate in Kombination mit Styrolpolymeren und/oder mit Pfropfpolymerisaten enthalten.

0173869

BAYER AKTIENGESELLSCHAFT 5090 Leverkusen, Bayerwerk

Konzernverwaltung RP PS/div-c
Patentabteilung

# Flammwidrige, thermoplastische Polymermischungen

Gegenstand der vorliegenden Erfindung sind flammwidrige, thermoplastische Polymermischungen, dadurch gekennzeichnet, daß sie

a) thermoplastische, halogenfreie, schwefelfreie und phosphorfreie, aromatische Polycarbonate, die 50 Mol-% bis 100 Mol-%, vorzugsweise 75 Mol-% bis 100 Mol-%, insbesondere 90 Mol-% bis 100 Mol-%, und ganz besonders 100 Mol-%, bifunktionelle Struktureinheiten der Formeln (1) und/oder (2) enthalten,

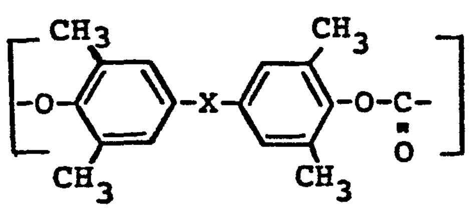

(1)

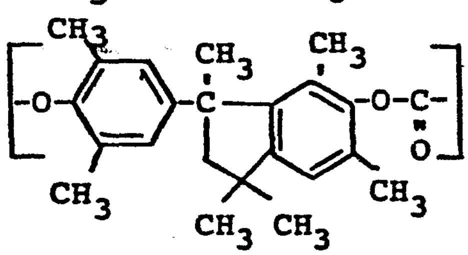

(2)

worin X eine Einfachbindung, ein $C_1$-$C_5$-Alkylen, ein $C_2$-$C_5$-Alkyliden, ein Cyclohexylen, Cyclohexyliden

oder ein zweibindiger Rest der Formel

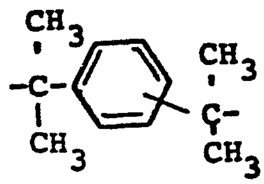 ist, und

50 bis 0 Mol-%, vorzugsweise 25 Mol-% bis 0 Mol-%, insbesondere 10 Mol-% bis 0 Mol-%, und ganz besonders 0 Mol-%, andere bifunktionelle Struktureinheiten der Formel (3) enthalten,

$$-O-D-O-\underset{\underset{O}{\|}}{C}- \qquad (3)$$

worin -O-D-O- andere halogenfreie, schwefelfreie und phosphorfreie Diphenolat-Reste als die in den Struktureinheiten (1) und (2) sind, vorzugsweise nur aus C-, H- und O-Atomen aufgebaut sind und vorzugsweise 6 bis 30 C-Atome haben,

b) halogenfreie Styrolpolymere mit mittleren Gewichtsmittelmolekulargewichten $\bar{M}w$ zwischen 10 000 und 600 000 und/oder

c) halogenfreie Pfropfpolymere von halogenfreien Monomeren auf halogenfreie Kautschuke, denen ein Kautschuk:Pfropfmonomeren-Gewichtsverhältnis von 93 %:7 % bis 5 %:95 %, vorzugsweise von 90 %:10 % bis 70 %:30 % und von 50 %:50 % bis 10 %:90 % zugrundeliegt,

d) halogenfreie und schwefelfreie Phosphatester der Formel (7)

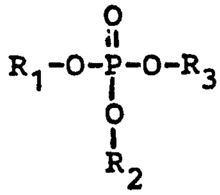 ,

worin $R_1$, $R_2$ und $R_3$ gleich oder verschieden und $C_1$-$C_{20}$-Kohlenwasserstoffreste sind, wobei mindestens zwei der Reste $R_1$, $R_2$ und $R_3$ substituierte oder unsubstituierte Arylreste sind, und gegebenenfalls

e) Tetrafluorethylenpolymerisate enthalten,

wobei die Komponente a) in Mengen von 25 bis 95 Gew.-%, vorzugsweise 35 bis 90 Gew.-%, insbesondere von 45 bis 90 Gew.-% und ganz besonders bevorzugt von 45 bis 70 Gew.-% und 80 bis 90 Gew.-%, vorliegt, die Komponente b) in Mengen von 2 bis 74 Gew.-%, vorzugsweise von 5 bis 65 Gew.-% und insbesondere von 9 bis 54 Gew.-% vorliegen kann,

die Komponente c) in Mengen von 2 bis 74 Gew.-%, vorzugsweise von 5 bis 65 Gew.-% und insbesondere von 9 bis 54 Gew.-% vorliegen kann,

die Komponente d) in Mengen von 1 bis 45 Gew.-%, vorzugsweise von 2,5 bis 30 Gew.-%, besonders bevorzugt von 4 bis 20 Gew.-% und insbesondere von 5 bis 15 Gew.-% vorliegt, und

die Komponente e) in Mengen von 0 bis 5 Gew.-%, vorzugsweise von 0,02 bis 2 Gew.-%, besonders bevorzugt von 0,04 bis 1 Gew.-% und insbesondere von 0,05 bis 0,5 Gew.-% vorliegen kann,

wobei die Summe der Komponenten b) + c) mindestens jeweils 4 Gew.-% und die Summe aller Komponenten jeweils 100 Gew.-% beträgt.

Vorzugsweise beträgt der Anteil der Komponenten b) und/ oder c) höchstens 75 %, insbesondere höchstens 50 %.

Die genannten Vorzugsbereiche der Komponenten a) bis e) einschließlich verstehen sich jeweils individuell, d.h. sie sind nicht automatisch an die Vorzugsbereiche der jeweiligen anderen Komponenten gekoppelt.

Bezogen auf das Gesamtgewicht der jeweiligen erfindungsgemäßen Polymermischungen sollen diese bei Anwesenheit der Komponente c) jeweils 3 bis 30 Gew.-%, vorzugsweise 5 bis 25 Gew.-% und insbesondere 7 bis 20 Gew.-% Kautschuk enthalten.

Gemäß der DE-OS 2 228 072 werden thermoplastische Polycarbonate mit einem Gemisch aus Hexabrombenzol und einer Antimonverbindung flammwidrig eingestellt, welche zusätzlich einen Phosphatester als Synergisten enthalten können.

Als Polycarbonate kommen auch solche aus tetraalkylierten Diphenolen in Betracht. Der alleinige Zusatz von 10 Gew.-Teilen Triphenylphosphat zu Bisphenol-A-Polycarbonat hat allerdings keine Antitropfwirkung gemäß Entflammungstest UL-Subj. 94 (siehe Seite 20 der DE-OS 2 228 072). Anstelle der Polycarbonate können auch Gemische aus Polyphenyletherharzen und Styrolharzen flammwidrig gemacht werden, wobei bei alleiniger Verwendung von Phosphatester 11 Gew.-% benötigt werden (siehe Seite 10 der DE-OS 22 28 072).

Aus der DE-OS 24 34 085 sind verschäumbare thermoplastische Kunststoffe bekannt, wobei als Thermoplasten unter anderem Polycarbonate, Polymerisate oder Mischungen davon genannt sind. Als Polymerisate sind auch solche aus Butadien, Styrol und Acrylnitril oder aus Styrol allein genannt. Als Flammschutzmittel können die verschäumbaren Kunststoffe Phosphatester enthalten, gegebenenfalls in Kombination mit Halogenverbindungen. Als Halogenverbindungen sind keine Polytetrafluorethylenpolymerisate empfohlen und als Polycarbonate auch nicht die gemäß vorliegender Erfindung geeigneten.

Gemäß DE-OS 2 921 325 ist der Zusatz von Pentaerythritdiphosphaten als Flammschutzmittel für Polycarbonate beschrieben, wobei zusätzlich Halogenverbindungen mitverwendet werden können, wobei dies gemäß Seite 9 der DE-OS 29 21 325 aus der zitierten US-Patentschrift 33 92 136 auch Polyvinylidenfluoride sein können; als Polycarbonate sind die gemäß vorliegender Erfindung geeigneten nicht beschrieben. Den Polycarbonaten können ABS-Copolymerisate zugemischt sein.

Flammwidrige Mischungen aus Polycarbonaten, ABS-Polymerisaten und Halogenverbindungen sind bekannt (siehe DE-OS 2 903 100 und DE-OS 2 918 883). Gemäß DE-OS 2 903 100 wird die Flammwidrigkeit durch spezielle organische Sulfonate erreicht. Fluorierte Polyolefine können als tropfhemmende Mittel zugesetzt werden. Gemäß DE-OS 2 918 883 wird die Flammwidrigkeit durch Alkali- oder Erdalkalisalze von Säuren in Kombination mit Antitropfmitteln erreicht, wobei die ABS-Polymerisate nur maximal 10 Gew.-%, bezogen auf Gesamtmischung betragen.

Aus der DE-OS 29 18 882 sind Formmassen aus Polycarbonaten, Halogenverbindungen, Alkali- oder Erdalkalisalze und fluorierten Polyolefinen bekannt, die als zusätzliches thermoplastisches Harz Polycarbonate aus tetraalkylierten Diphenolen in Mengen bis zu 10 Gew.-%, bezogen auf Gesamtmischung, enthalten.

Gemäß DE-OS 29 29 229 (Le A 19 751) werden spezielle Phosphite zu thermischen Stabilisierung von Polycarbonat-ABS-Gemischen eingesetzt. Die Formmassen können außerdem Flammschutzmittel enthalten.

Gemäß der DE-OS 3 002 985 sind Mischungen aus speziellen Polyesterkombinationen mit Pfropfpolymeren und aromatischen Polycarbonaten beschrieben; diese Mischungen können noch flammhemmende Mittel enthalten. Als flammhemmende Mittel sind Phosphorverbindungen genannt sowie Halogenverbindungen. Tropfhemmende Mittel können außerdem zugesetzt werden (Seite 12 der DE-OS).

Als Polycarbonate sind nur indirekt über die zitierte US-Patentschrift 40 34 016 solche von alkylierten Diphenolen beschrieben, als Halogenverbindungen sind Polytetrafluorethylenpolymerisate nicht angesprochen.

Gemäß US-Patent 3 671 487 werden glasfaserverstärkte thermoplastische Polyester auf der Basis von Glykolen und Iso- bzw. Terephthalsäure mit flammwidrigen Additiven, wie Phosphatestern, und Polytetrafluorethylenen versetzt. Aromatische, thermoplastische Polycarbonate werden von der Anmeldung nicht umfaßt. Dies liegt auch nicht nahe, da die genannten Polyester im Gegensatz zu den amorphen Polycarbonaten teilkristalline Thermoplaste mit völlig anderen Eigenschaften sind.

Gemäß EP-OS 00 74 112 werden zu Polycarbonat/ABS-Gemischen Phosphatester als Weichmacher zugegeben. Als Phosphatester ist beispielsweise Diphenyl-octyl-phosphat genannt. Die speziellen Polycarbonate gemäß Komponente a) der vorliegenden Erfindung sind nicht aufgeführt. Ein Zusatz von fluorierten Polyolefinen ist nicht beschrieben.

Gemäß EP-OS 0 103 230 (Le A 21 835) werden die Mischungen aus den Komponenten a), b) und/oder c) der vorliegenden Erfindung mit Polyphosphaten flammwidrig ausgerüstet, wobei diese ein $\overline{M}w$ (Gewichtsmittel) von 1600 bis 150 000 haben können. Zusätzlich kann Polytetrafluorethylen mitverwendet werden. Die Polyphosphate sind jedoch strukturell von den Phosphaten der Formel (7) verschieden.

Gemäß US-Patent 4 355 126 beziehungsweise US-Patent 4 107 232 sind unter anderem auch flammwidrige ABS-Polymerisate bekannt, die Polytetrafluorethylene enthalten. Als Flammschutzmittel ist Triphenylphosphat besonders bevorzugt. Demgegenüber war nicht zu erwarten, daß der Zusatz der Polycarbonate auf Basis tetraalkylierter Diphenole höher flammwidrige Formmassen ergibt.

Die erfindungsgemäßen Polymermischungen haben flammwidrige Eigenschaften, ermittelt in bekannter Weise nach UL-Subjekt 94 oder nach dem $O_2$-Index gemäß ASTM-D-2863-A.

Gegenstand der vorliegenden Erfindung ist somit auch die Verwendung der erfindungsgemäßen Polymermischungen als Flammschutzmittel zur Herstellung von flammwidrig auszurüstenden Gegenständen aus thermoplastischen Kunststoffen.

Die erfindungsgemäß einsetzbaren Polycarbonate gemäß Komponente a) können in bekannter Weise durch den Einbau von halogenfreien, schwefelfreien und phosphorfreien Verzweigern verzweigt sein.

Halogenfreie Polycarbonate im Sinne der vorliegenden Erfindung bedeutet, daß die Polycarbonate aus halogenfreien Diphenolen, halogenfreien Kettenabbrechern und gegebenenfalls halogenfreien Verzweigern aufgebaut sind, wobei der Gehalt an untergeordneten ppm Mengen an verseifbarem Chlor, resultierend beispielsweise aus der Herstellung der Polycarbonate mit Phosgen nach dem Phasengrenzflächenverfahren, nicht als halogenhaltig im Sinne der Erfindung anzusehen ist. Derartige Polycarbonate mit ppm-Gehalten an verseifbarem Chlor sind halogenfreie Polycarbonate im Sinne vorliegender Erfindung. Entsprechendes gilt für schwefelfreie beziehungsweise phosphorfreie Polycarbonate; S- oder P-haltige Verunreinigungen, resultierend beispielsweise aus der Aufarbeitung des Polycarbonats, würden nicht mitzählen.

Die Herstellung der erfindungsgemäß einsetzbaren Polycarbonate ist bekannt und beispielsweise in den Deutschen Offenlegungsschriften Nr. 2 211 957 und Nr. 2 615 038 beschrieben.

Der Struktureinheit (1) zugrundeliegende Diphenole der Formel (4)

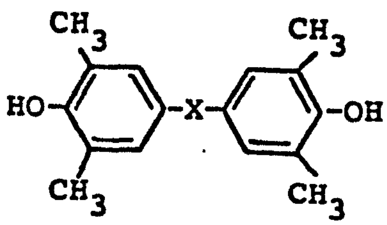

(4)

sind beispielsweise:

Bis-(3,5-dimethyl-4-hydroxyphenyl),
Bis-(3,5-dimethyl-4-hydroxyphenyl)-methan,
1,1-Bis-(3,5-dimethyl-4-hydroxyphenyl)-ethan,
2,2-Bis-(3,5-dimethyl-4-hydroxyphenyl)-propan,
1,1-Bis-(3,5-dimethyl-4-hydroxyphenyl)-2-methyl-propan,
2,2-Bis-(3,5-dimethyl-4-hydroxyphenyl)-butan,
2,4-Bis-(3,5-dimethyl-4-hydroxyphenyl)-2-methylbutan,
1,1-Bis-(3,5-dimethyl-4-hydroxyphenyl)-cyclohexan und
α,α'-Bis-(3,5-dimethyl-4-hydroxyphenyl)-p-diisopropylbenzol.

Bevorzugte Diphenole der Formel (4) sind:

2,2-Bis-(3,5-dimethyl-4-hydroxyphenyl)-methan und 2,2-Bis-(3,5-dimethyl-4-hydroxyphenyl)-propan, wobei letzteres insbesondere auch als Rohbisphenol, wie es nach den Verfahren der DOS 2 928 464 und der DOS 2 928 443 aus reinem 2,6-Dimethylphenol und aus, insbesondere mit Kresolen, verunreinigten technischen 2,6-Dimethylphenolen hergestellt werden kann, eingesetzt werden kann. Derartige Rohbisphenole müssen jedoch mindestens 80 Gew.-% bevorzugt mindestens 90 Gew.-% 2,2-Bis-(3,5-dimethyl-4-hydroxyphenyl)-propan enthalten.

Das besonders bevorzugte Diphenol der Formel (4) ist das Bis-(3,5-dimethyl-4-hydroxyphenyl)-methan.

Das der Struktureinheit (2) zugrundeliegende Diphenol (5)

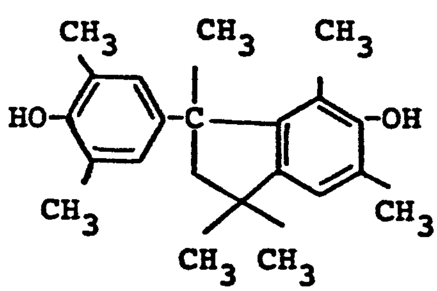

(5)

ist ebenfalls ein bevorzugtes Diphenol.

Der Struktureinheit (3) zugrundeliegende Diphenole der Formel (6)

HO-D-OH (6)

sind beispielsweise:

Resorcin, Dihydroxydiphenyle, Bis-(hydroxyphenyl)-alkane, Bis-(hydroxy-phenyl)-cycloalkane, Bis-(hydroxyphenyl)-ether, Bis-(hydroxyphenyl)-ketone und α,α'-Bis-(hydroxyphenyl)-diisopropylbenzole.

Derartige Diphenole sind beispielsweise in der Monographie "Hermenn Schnell, Chemistry and Physics of Polycarbonates", New York, Interscience Publishers, 1964, Polymer Reviews, Vol 9, beschrieben.

Bevorzugte Diphenole (6) sind beispielsweise

Bis-(4-hydroxyphenyl),
1,1-Bis-(4-hydroxyphenyl)-cyclohexan,
2,2-Bis-(4-hydroxyphenyl)-propan,
Bis-(hydroxyphenyl)-methan (auch Isomerengemische),
2,2-Bis-(3-methyl-4-hydroxyphenyl)-propan und
α,α'-Bis-(4-hydroxyphenyl)-p-diisopropylbenzol.

Besonders bevorzugte Diphenole (6) sind beispielsweise 2,2-Bis-(4-hydroxyphenyl)-propan und Bis-(4-hydroxyphenyl)-methan.

Die erfindungsgemäß einsetzbaren Polycarbonate weisen im allgemeinen Molekulargewichte $\bar{M}_w$ (Gewichtsmittel, z.B. bestimmt nach der Lichtstreumethode) von 10.000 - 200.000, bevorzugt von 20.000 - 80.000, besonders bevorzugt von 25.000 - 60.000 und ganz besonders bevorzugt von 30.000 - 45.000 auf.

Erfindungsgemäß einsetzbare Phosphatester gemäß Komponente d) sind solche der Formel (7)

$$\begin{array}{c} \quad\quad\quad O \\ \quad\quad\quad \| \\ R_1 - O - P - O - R_3 \\ \quad\quad\quad | \\ \quad\quad\quad O \\ \quad\quad\quad | \\ \quad\quad\quad R_2 \end{array} \qquad (7)$$

worin $R_1$, $R_2$ und $R_3$ gleich oder verschieden und $C_1$-$C_{20}$-Kohlenwasserstoffreste sind, wobei mindestens zwei der Reste $R_1$, $R_2$ und $R_3$ substituierte oder unsubstituierte Arylreste sind.

Bevorzugte Kohlenwasserstoffreste sind solche mit 2 bis 16 C-Atomen, insbesondere solche mit 6 bis 10 C-Atomen. Bevorzugte Arylreste sind ebenfalls solche mit 6 bis 10 C-Atomen.

Geeignete Kohlenwasserstoffreste sind Alkyl-, Cycloalkyl- und Aralkyl-Reste. Unsubstituierte Arylreste sind beispielsweise Phenyl und Naphthyl. Substituierte Arylreste sind Alkaryl-, Cycloalkaryl-, arylsubstituierte Alkaryl- und arylsubstituierte Aryl-Reste.

Beispiele für Alkylreste sind Methyl, Ethyl, Propyl, Butyl, Pentyl, Hexyl, Heptyl, Octyl, Nonyl, Decyl, Undecyl, Dodecyl, Neopentyl, 3,5,5-Trimethylhexyl, 3-Methylhexyl, 2-Ethylhexyl und 2,5,5-Trimethylhexyl.

Ein Beispiel für einen Cycloalkylrest ist Cyclohexyl.

Beispiele für Aralkylreste sind Benzyl und Phenethyl.

Beispiele für Alkarylreste sind o-, p- und m-Tolyl, 2,6- und 2,4-Dimethylphenyl , Trimethylphenyle, o-, p- und m-Isopropylphenyle , Nonylphenyl, p-tert-Butylphenyl, 2,4-Diisopropylphenyl und Triisopropylphenyl.

Ein Beispiel für einen Cycloalkarylrest ist o-Cyclohexylphenyl. Beispiele für arylsubstituierte Alkarylreste sind p-Benzylphenyl und p-Phenethylphenyl.

Ein Beispiel für ein arylsubstituiertes Aryl ist Diphenyl.

Bevorzugte Reste sind Phenyl, o-, m-, und p-Tolyl 2,6-Dimethylphenyl, 2,4-Diisopropylphenyl und Triisopropylphenyl.

Bevorzugte Phosphatester der Formel (7) sind solche, wo die Reste $R_1$, $R_2$ und $R_3$ Aryl-Reste oder Alkaryl-Reste sind.

Beispiele für die erfindungsgemäß einsetzbaren aromatischen Phosphate der Formel (7) sind:

Bis-(phenyl)-methylphosphat, Bis-(phenyl)-ethylphosphat, Bis-(phenyl)-butylphosphat, Bis-(4-methylphenyl)-2-ethylhexylphosphat, Bis-(phenyl)-2-ethylhexylphosphat, Bis-(phenyl)-octylphosphat, Bis-(phenyl)-isodecylphosphat, Tris-(phenyl)-phosphat, Tris-(2-methylphenyl)-phosphat,

Tris-(3-methylphenyl)-phosphat, Tris-(4-methylphenyl)-phosphat, Tris-(2,6-dimethylphenyl)-phosphat, Tris-(isopropylphenyl)-phosphat, Tris-(nonylphenyl)-phosphat, Bis-(phenyl)-2-methylphenylphosphat, Bis-(phenyl)-4-methylphenylphosphat, Bis-(phenyl)-isopropylphenylphosphat, Bis-(phenyl)-2,6-dimethylphenylphosphat, Bis-(2-methylphenyl)-phenylphosphat, Bis-(4-methylphenyl)-phenylphosphat, Bis-(isopropylphenyl)-phenylphosphat, Bis-(2,6-dimethylphenyl)-phenylphosphat, Bis-(2,6-dimethylphenyl)-4-tertiär-butylphenylphosphat, Bis-(2,6-dimethylphenyl)4-methylphenylphosphat, Bis-(2,6-dimethylphenyl)-3-methylphenylphosphat, Bis-(2,6-dimethylphenyl)-4-isopropylphenylphosphat und Bis-(2,6-dimethylphenyl)-2-isopropylphenylphosphat.

Bevorzugte Phosphate der Formel (7) sind:

Tris-(phenyl)-phosphat, Tris-(methylphenyl)-phosphat, Tris-(2,6-dimethylphenyl)-phosphat, Bis-(phenyl)-methylphenylphosphat, Bis-(methylphenyl)-phenylphosphat, Bis-(2,6-dimethylphenyl)-phenylphosphat und Bis-(2,6-dimethylphenyl)-methylphenylphosphat.

Besonders bevorzugte Phosphate der Formel (7) sind:

Tris-(phenyl)-phosphat, Tris-(methylphenyl)-phosphat und Bis-(phenyl)-methylphenylphosphat.

Erfindungsgemäß einsetzbare Tetrafluorethylenpolymerisate gemäß Komponente c) sind Polymere mit Fluorgehalten von 65 bis 76 Gew.-%, vorzugsweise 70 bis 76 Gew.-%. Beispiele sind Polytetrafluorethylen, Tetrafluorethylen-Hexafluorpropylen-Copolymere oder Tetrafluorethylencopolymerisate mit geringen Mengen fluorfreier copolymerisierbarer ethylenisch ungesättigter Monomerer. Bevorzugt wird Polytetrafluorethylen eingesetzt. Die Polymerisate sind bekannt. Sie können in feinteiliger Form, gewöhnlich als Pulver, verwendet werden. Sie können nach bekannten Verfahren hergestellt werden, so beispielsweise durch Polymerisation von Tetrafluorethylen in wäßrigem Medium mit einem freie Radikale bildenden Katalysator, beispielsweise Natrium-, Kalium- oder Ammoniumperoxidisulfat bei Drucken von 7 bis 71 kg/cm² und bei Temperaturen von 0 bis 200°C, vorzugsweise bei Temperaturen von 20 bis 100°C. (Nähere Einzelheiten siehe beispielsweise US-Patent 2 393 967.)

Die erfindungsgemäß geeigneten Polytetrafluorethylene sollen vorzugsweise Gewichtsmittelmolekulargewichte $\bar{M}w$ zwischen $10^5$ und $10^6$ haben.

Unter halogenfreien Styrolpolymeren gemäß Komponente b) werden Homo- und Copolymere verstanden, die mindestens 50 Gew.-% mindestens eines Monomeren aus der Gruppe des

Styrols und seiner halogenfreien Derivate einpolymerisiert enthalten. Zu dieser Gruppe gehören z.B. Styrol, $\alpha$-Methylstyrol, p-Methylstyrol, 3,4-Dimethylstyrol, o- und p-Divinylbenzol und p-Methyl-$\alpha$-methylstyrol. Bevorzugt sind Styrol, $\alpha$-Methyl- und p-Methylstyrol, besonders bevorzugt sind Styrol und p-Methylstyrol, ganz besonders bevorzugt ist Styrol selbst.

Die Styrolpolymeren dieser Erfindung können neben Styrol und seinen Derivaten bis zu 50 Gew.-% mindestens eines halogenfreien Monomeren aus der Gruppe der Acryl- und Methacrylverbindungen und der Gruppe der ungesättigten Dicarboxylanhydride einpolymerisiert enthalten. Zu der ersten Gruppe gehören z.B. Acryl- und Methacrylsäure, Acrylnitril, Methacrylnitril, Methylacrylat, Ethylacrylat, n- und iso-Propylacrylat, n- und iso-Butylacrylat, 2-Ethylhexylacrylat, Methylmethacrylat, Ethylmethacrlyat, n- und iso-Propylmethacrylat, n- und iso-Butylmethacrylat, Cyclohexylmethacrylat und Isobornylmethacrylat. Aus dieser Gruppe werden Acrylnitril und Methylmethacrylat bevorzugt. Das bevorzugte Monomere der zweiten Gruppe ist das Maleinsäureanhydrid.

Bevorzugte halogenfreie Styrolpolymere sind insbesondere Polystyrol, Styrol-Acrylnitril-Copolymere mit 1,5 bis 15 Gew.-% Acrylnitrilgehalt, Styrol-Methylmethacrylat-Copolymere, Styrol-Maleinsäureanhydrid-Copolymere mit bis zu 20 Gew.-% Maleinsäureanhydrid und Styrol-Acrylnitril-Maleinsäureanhydrid-Copolymere mit 1,5 bis 15 Gew.-% Acrylnitril und bis zu 20 Gew.-% Maleinsäureanhydrid. Bevorzugt

werden von diesen Polystyrol und die genannten Styrol-Acrylnitril-Copolymeren, ganz besonders bevorzugt die letzteren. Die erfindungsgemäß zu verwendenden Styrolpolymeren sollen mittlere Gewichtsmittelmolekulargewichte $\bar{M}w$ (gemessen in DMF bei c = 5 g/l und 20°C) zwischen 10 000 und 600 000 haben und können durch Masse-, Suspensions- oder Emulsionspolymerisation in Gegenwart von Katalysatoren in bekannter Weise hergestellt werden.

(Literatur dazu: Beilsteins Handbuch der organischen Chemie, 4. Auflage, 3. Ergänzungswerk, Band 5, Seiten 1163 bis 1169, Springer-Verlag, 1964; H. Ohlinger, Polystyrol, 1. Teil, Herstellungsverfahren und Eigenschaften der Produkte, Springer Verlag 1955).

Unter halogenfreien Pfropfpolymeren gemäß Komponente c) werden mit mindestens einem halogenfreien Monomeren gepfropfte halogenfreie Kautschuke verstanden. Als halogenfreie Monomere können die obengenannten eingesetzt werden, die für die Herstellung der erfindungsgemäß zu verwendenden Styrolpolymeren aufgeführt sind. Die dort als bevorzugt und besonders bevorzugt aufgeführten Monomeren werden bei der Pfropfung der Kautschuke zu Pfropfpolymeren ebenso bevorzugt bzw. besonders bevorzugt eingesetzt.

Es können beliebige halogenfreie Kautschuke als Pfropfgrundlage für die Herstellung der erfindungsgemäß zu verwendenden halogenfreien Pfropfpolymeren eingesetzt werden. Bevorzugt sind Butadienkautschuke mit bis zu

50 Gew.-% an einpolymerisierten halogenfreien Comonomeren, vorzugsweise Styrol oder Acrylnitril, insbesondere Polybutadien. Bevorzugt sind weiterhin halogenfreie Acrylester-Kautschuke und halogenfreie Polyolefinkautschuke wie Ethylen-Propylen-Dien-Terpolymerisate. Besonders bevorzugte halogenfreie Kautschuke sind Polybutadien und halogenfreie Acrylesterkautschuke. Derartige Kautschuke sind beispielsweise in den deutschen Offenlegungsschriften Nr. 23 29 585 und Nr. 31 18 861, beschrieben. Die erfindungsgemäß zu verwendenden halogenfreien Pfropfpolymeren sollen ein Kautschuk: Pfropfmonomeren-Gewichtsverhältnis von 93 % : 7 % bis 5 % : 95 % haben, vorzugsweise von 90 % : 10 % bis 70 % : 30 % und von 50 % : 50 % bis 10 % : 90 %. Derartige Pfropfpolymerisate können nach bekannten Verfahren erhalten werden, beispielsweise nach dem Verfahren der Emulsionpolymerisation oder Suspensionspolymerisation.

Erfindungsgemäß bevorzugt zu verwendende Pfropfpolymere sind die, die aus halogenfreiem Kautschuk und aufgepfropftem Styrol, Methylmethacrylat, Styrol-Acrylnitril-Gemisch, Styrol-Methylmethacrylat-Gemisch oder Styrol-Maleinsäureanhydrid-Gemisch bestehen. Besonders bevorzugt werden Pfropfpolymere, die aus Kautschuk und aufgepfropftem Styrol-Acrylnitril-Gemisch mit einem Acrylnitril-Gehalt von 1,5 bis 15 Gew.-%, bezogen auf aufgepfropftes Styrol-Acrylnitril-Gemisch bestehen.

Die Herstellung der Pfropfpolymeren kann wie bereits erwähnt nach bekannten Verfahren erfolgen, wie dies beispielsweise in den beiden vorstehend angezogenen Offenlegungsschriften dargelegt ist.

Das Pfropfpolymere wird bevorzugt durch radikalische Polymerisation des oder der Pfropfmonomeren in Anwesenheit des Kautschuks, der die Pfropfgrundlage darstellt, erhalten. Die Pfropfpolymerisation mehr als eines Monomers auf den Kautschuk ist so durchzuführen, daß die Harzkomponente der Pfropfpolymerisate nach der Polymerisation das gewünschte Monomerenverhältnis aufweist. Unter "Pfropfauflage" wird der gesamte polymerisierte Teil der für die Pfropfpolymerisation eingesetzten Monomeren verstanden, unabhängig davon, welcher Anteil der Monomeren mit dem Kautschuk dabei chemisch verknüpft worden ist. Die erfindungsgemäß einzusetzende Pfropfpolymer-Komponente (C) kann also auch aus einem, innigen Gemisch aus gepfropftem Polymer und Homo- oder Copolymer bestehen.

Unter Styrolpolymeren und Pfropfpolymeren im Sinne dieser Erfindung werden auch Mischungen von Styrolpolymeren und Mischungen von Pfropfpolymeren verstanden.

Die Herstellung der erfindungsgemäßen Abmischungen erfolgt in bekannter Weise.

Die erfindungsgemäßen flammwidrigen thermoplastischen Mischungen zeigen gute Eigenschaften. Die Verträglichkeit der erfindungsgemäß einsetzbaren aromatischen Polycarbonate, Styrolpolymeren und aromatischen Phosphate ist so gut, daß zum Teil völlig transparente Polymermischungen erhalten werden können. Beim erfindungsgemäßen Einsatz von Polytetrafluorethylen können diese transparenten Mischungen transluzent werden. Beim erfindungsgemäßen Einsatz von Pfropfpolymeren können sie transluzent bis opak werden. Auch bei größerem Gehalt an aromatischem Phosphat werden die erfindungsgemäßen flammwidrigen thermoplastischen Mischungen nicht klebrig und zeigen eine glänzende Oberfläche hoher Güte. Weiterhin sind sie bei Einsatz reiner Ausgangskomponenten farblos bis weißlich-opak. Besonders interessant ist die gute Flammwidrigkeit der erfindungsgemäßen Polymermischungen, die sich teilweise in äußerst kurzen Brennzeiten und äußerst geringer Abtropfneigung zeigt.

Außerdem weisen sie relativ hohe Wärmestandfestigkeiten und gute mechanische Eigenschaften auf. Ihre Fließnahtfestigkeit ist hervorragend. Sie sind sehr hydrolysefest. Bei der thermoplastischen Verarbeitung weisen sie, auch schon bei relativ niedriger Verarbeitungstemperatur, eine hohe Fließfähigkeit auf. Sie sind sehr verarbeitungsstabil, auch bei hoher Verarbeitungstemperatur. Weiterhin ist ihre Licht- und Witterungsstabilität hoch.

Besonders überraschend ist die hohe Flammwidrigkeit der erfindungsgemäßen thermoplastischen Polymermischungen auch schon mit kleinen Anteilen an aromatischem Phosphat. Weiterhin ist besonders überraschend, wie durch Einsatz von wenig Polytetrafluorethylen in den erfindungsgemäßen

Polymermischungen die Brennzeiten nach der Beflammung drastisch herabsetzbar sind. Auch ist es besonders überraschend, wie durch Einsatz von Bis-(3,5-dimethyl-4-hydroxyphenyl)-methan einkondensiert enthaltenden aromatischen Polycarbonaten die Flammwidrigkeit in den erfindungsgemäßen thermoplastischen Polymermischungen nochmals beträchtlich zu steigern ist, ebenso wie durch Einsatz von Styrol-Acrylnitril-Copolymeren und Styrol-Acrylnitril-gepfropften Kautschuken, in denen der Gehalt des polymerisierten Styrol-Acrylnitril-Gemisches an Acrylnitril 1,5-15 Gew.-% beträgt.

Die erfindungsgemäßen flammwidrigen thermoplastischen Polymermischungen mit $O_2$-Indices über 24 %, insbesondere jedoch mit $O_2$-Indices über 26 % sind bevorzugt, besonders jedoch sind sie bevorzugt mit $O_2$-Indices über 28 % und insbesondere über 30 %. Ganz besonders bevorzugt sind jedoch Mischungen, wenn sie nach UL-Subj. 94 die Klassifizierungen V II, V I und V O erreichen, wobei der Grad der Bevorzugung in der genannten Reihenfolge der Klassifizierung liegt.

Die erfindungsgemäßen Polymermischungen können noch für die thermoplastischen Polycarbonate und/oder für die Styrolpolymeren und/oder für die Pfropfpolymeren übliche Füllstoffe, wie Mineralien oder Ruß, Verstärkungsstoffe, wie Glasfasern oder Kohlefasern, Stabilisatoren wie UV-, Oxidations- und Thermostabilisatoren, Entformungsmittel, Farbstoffe oder Pigmente oder andere übliche Zusatzstoffe enthalten.

Die erfindungsgemäßen Polymermischungen sind überall dort einsetzbar, wo der Einsatz von flammwidrigen Kunststoffen, insbesondere von flammwidrigen Polycarbonat-Polymerisat-Abmischungen gefordert ist, also beispielsweise im Gerätesektor, im Elektro- und Elektronikbereich, im Installations- und Heizungsbereich sowie auf dem Verkehrssektor.

Beispiele für den Einsatz der flammwidrigen erfindungsgemäßen Polymermischungen sind Kaffeemaschinen, Elektroherde, Grillgeräte, Bügeleisen, Waschmaschinen, Filmgeräte, Diaprojektoren, Verkabelungen, Telefonanlagen, Fernschreibenanlagen, Kabelfernsehanlagen, Elektromotoren, Klimaanlagen, Rechenanlagen, Beleuchtungsanlagen, elektrische Installationen im Wohn- und Industriebereich, Radiogeräte, Fernsehgeräte, Plattenspieler, Videorecorder, Automobile und Flugzeuge.

Einige spezielle Beispiele für die Verwendung der erfindungsgemäßen Polymermischungen sind Aschenbecher in Automobilen, Speisetabletts in Flugzeugen, Instrumententräger in Automobilen, Lampenhalterungen, Träger elektrischer und elektronischer Bauteile in verschiedensten Geräten sowie Abdeckungen für Sicherungselemente und Stromschalter in elektrischen Anlagen.

Beispiel 1

Flammwidrigkeit von Mischungen aus verschiedenen Polycarbonaten, Pfropfpolymerisaten, Triphenylphosphat und Polytetrafluorethylen

Die in Tab. 1 aufgeführten Mischungen wurden in einem Doppelwellenextruder bei ca. 290°C über die Schmelze hergestellt. Die Mischungen wurden dann im Extrusionsspritzguß zu Prüfkörpern verarbeitet, die den in Tab. 1 genannten Flammwidrigkeitsprüfungen unterworfen wurden. Die Prüfungen erbrachten, wie aus Tab. 1 zu entnehmen, die folgenden Ergebnisse. Mit einer Kombination aus Triphenylphosphat und Polytetrafluorethylen lassen sich Mischungen aus den erfindungsgemäßen Polycarbonaten und Pfropfpolymeren in ihrer Flammwidrigkeit beträchtlich verbessern (s. Bsp. 1a - 1h). Bei Einsatz von Pfropfpolymerisaten mit Styrol/Acrylnitril-Pfropfauflage niedrigen Acrylnitrilgehaltes (hier Styrol/Acrylnitril-Verhältnis 90/10 Gewichtsteile) werden besonders kurze Brennzeiten erzielt (Vergleich Bsp. 1d mit 1f). Bei Einsatz von überwiegend Bis-(3,5-dimethyl-4-hydroxyphenyl)-methan enthaltendem Polycarbonat zeigen Mischungen mit 10 % Pfropfpolymer schon ohne Zusatz gute Flammwidrigkeit (s. Bsp. 1 g), jedoch wird die Flammwidrigkeit durch den Zusatz von Triphenylphosphat und PTFE noch beträchtlich gesteigert (s. Bsp. 1h).

Tabelle 1: Verbesserung der Flammwidrigkeit von Mischungen aus Polycarbonat auf der Basis von TMBPA und TMBPF mit kautschukhaltigen Pfropfpolymeren durch Zusatz von Triphenylphosphat und PTFE

| Bsp. 1 | Polycarbonat % | kautschukhaltiges Polymer % | TPP % | PTFE % | $O_2$-Index % | UL -Subject 94 1,6 mm |
|---|---|---|---|---|---|---|
| a | MPC 90 | ACR 10 | - | - | 21 | n.b. |
| b | MPC 82,8 | ACR 10 | 7 | 0,2 | 26 | V I 12/8/-/- 91/93/24 |
| c | MPC 90 | ABS 10 | - | - | 21 | n.b. |
| d | MPC 82,8 | ABS 10 | 7 | 0,2 | 26,5 | V II 12/8/1/- 94/102/27 |
| e | MPC 90 | ABS* 10 | - | - | 23 | n.b. |
| f | MPC 82,8 | ABS* 10 | 7 | 0,2 | 29,5 | V I 16/4/-/- 58/18/12 |
| g | FPC 90 | ABS* 10 | - | - | 34 | V I 16/4/-/- 62/78/12 |
| h | FPC 84,8 | ABS* 10 | 5 | 0,2 | 41,5 | V O 20/-/-/- 12/12/2 |

Zu Tabelle 1

MPC = Polycarbonat aus 2,2-Bis-(3,5-dimethyl-4-hydroxy-phenyl)-propan (TMBPA), $\eta$ rel = 1,297 (5 g/l in $CH_2Cl_2$ bei 25°C).

FPC = Copolycarbonat aus Bis-(3,5-dimethyl-4-hydroxyphenyl)-methan (TMBPF) und TMBPA 75/25 Molteile, $\eta$ rel = 1,295 (5 g/l in $CH_2Cl_2$ bei 25°C).

ACR = Pfropfpolymerisat mit Kern-Mantel-Struktur der folgenden Zusammensetzung, ausgedrückt in Gewichtsverhältnissen der es bildenden Monomeren: n-Butylacrylat/Butandiol-1,3- diacrylat/ Diallylmaleat/Methylmethacrylat = 79,2/ 0,4/0,4/20,0.

ABS = Pfropfpolymer aus 50 Gewichtsteilen Styrol/ Acrylnitril-Copolymer (72/28 Gewichtsteile) als Pfropfauflage und 50 Gewichtsteile Polybutadienkautschuk der mittleren Teilchengröße 0,4 µm als Pfropfgrundlage.

ABS* = Pfropfpolymer aus 50 Gewichtsteilen Styrol/ Acrylnitril-Copolymer (90/10 Gewichtsteile) als Pfropfauflage und 50 Gew.-Teile Polybutadienkautschuk der mittleren Teilchengröße 0,4 µm alsPfropfgrundlage.

TPP = Triphenylphosphat

PTFE = Polytetrafluorethylen pulverförmig (Hoechst AG, Hostaflon TF 2026).

Angaben zum Flammwidrigkeitstest UL Subject 94, Prüfkörperstärke 1,6 mm (s. Tab. 1): n.b. = nicht bestanden; V II, V I, V O = Flammwidrigkeitsklassen; Zahlenangaben obere Reihe = Anzahl Prüfkörper mit Brennzeiten $\leq$ 10 sec / $\leq$ 30 sec / $\leq$ 30 sec brennend abtropfend/ $>$ 30 sec;

Zahlenangaben untere Reihe : Summe der Nachbrennzeiten der Prüfkörper gelagert 2 Tage bei 23°C/Summe der Nachbrennzeiten der Prüfkörper gelagert 7 Tage bei 70°C/ längste Einzelnachbrennzeit. Die zur Flammwidrigkeitsklasse zusätzlich angeführten Zahlenangaben geben zusätzliche Informationen zur Beurteilung der Flammwidrigkeit.

Beispiel 2

Flammwidrigkeit von Mischungen aus TMBPF/TMBPA-Copolycarbonat 75/25 Molteile, SAN oder ABS sowie Triphenylphosphat und gegebenenfalls Polytetrafluorethylen.

Die in Tabelle 2 aufgeführten Mischungen wurden hergestellt und zu Prüfkörpern verarbeitet, wie in Bsp. 1 beschrieben. Die Prüfungen erbrachten, wie aus Tab. 2 zu entnehmen, folgende Ergebnisse. Der Zusatz von 5 Gew.-%

Triphenylphosphat zu den Mischungen aus TMBPF/TMBPA-Copolycarbonat 75/25 Molteile und SAN oder ABS erhöht deren Flammwidrigkeit beträchtlich (vgl. Bsp. 2 a und 2 b, 2 e und 2 f). Durch Zusatz von 0,2 Gew.-% Polytetrafluorethylen werden die Brennzeiten weiter verkürzt (s. UL-Subject 94, Bsp. 2 b und 2 c und Bsp. 2 f und 2 g). Die Erhöhung der Triphenylphosphatmenge von 5 auf 10 Gew.-% bei gleichbleibender Menge an Polytetrafluorethylen verkürzt die Brennzeiten weiterhin (s. UL-Subject 94, Bsp. 2 c und 2 d sowie Bsp. 2 g und 2 h).

Zu Tab. 2

FPC, ABS*, TPP, PTFE = Erklärung wie in Bsp. 1
n.b., V II, V I und V O = Erklärung wie in Bsp. 1
Zahlenangaben unter "UL-Subjekt 94" = Erklärung wie in Bsp. 1. SAN = Styrol-Acrylnitril-Copolymer (90/10).

Tabelle 2: Verbesserung der Flammwidrigkeit von Mischungen aus TMBPF/TMBPA-Copolycarbonat 75/25 Molteile und Styrolacrylnitrilharzen oder ABS-Pfropfpolymerisaten durch Zusatz von Triphenylphosphat oder Triphenylphosphat und PTFE

| Bsp. 2 | FPC % | SAN % | ABS* % | TPP % | PTFE % | $O_2$-Index ASTM 2863-77 % | UL-Subject 94 V 1,6 mm |
|---|---|---|---|---|---|---|---|
| a | 66,6 | 33,4 | - | - | - | 27 | n.b. |
| b | 63,3 | 31,7 | - | 5 | - | 30 | V II 6/9/5/- 162/110/29 |
| c | 63,2 | 31,6 | - | 5 | 0,2 | 31,5 | V I 11/9/-/- 141/96/14 |
| d | 59,8 | 30,0 | - | 10 | 0,2 | 30,5 | V I 16/4/-/- 60/39/14 |
| e | 66,6 | - | 33,4 | - | - | 29 | n.b. |
| f | 63,3 | - | 31,7 | 5 | - | 38,5 | V II 11/7/2/- 94/125/21 |
| g | 63,2 | - | 31,6 | 5 | 0,2 | 36,0 | V I 13/7/-/- 89/60/16 |
| h | 59,8 | - | 30,0 | 10 | 0,2 | 34,0 | V O 20-/-/- 27/23/5 |

Patentansprüche

1. Thermoplastische Polymermischungen, dadurch gekennzeichnet, daß sie

a) thermoplastische, halogenfreie, schwefelfreie und phosphorfreie, aromatische Polycarbonate, die 50 Mol-% bis 100 Mol-%, bifunktionelle Struktureinheiten der Formel (1) und/oder (2) enthalten,

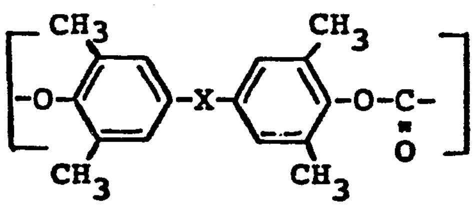
(1)

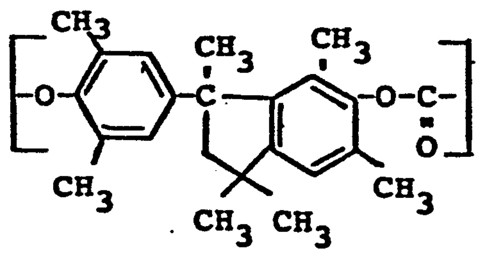
(2)

worin X eine Einfachbindung, ein $C_1$-$C_5$-Alkylen, ein $C_2$-$C_5$-Alkyliden, ein Cyclohexylen, Cyclohexyliden oder ein zweibindiger Rest der Formel

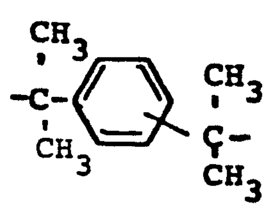
ist, und

50 bis 0 Mol-%, vorzugsweise 25 Mol-% bis 0 Mol-%, insbesondere 10 Mol-% bis 0 Mol-%, und ganz besonders 0 Mol-%, andere bifunktionelle Struktureinheiten der Formel (3) enthalten,

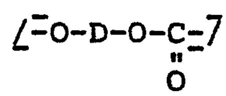 (3)

worin -O-D-O- andere halogenfreie, schwefelfreie und phosphorfreie Diphenolat-Reste als die in den Struktureinheiten (1) und (2) sind, vorzugsweise nur aus C-, H- und O-Atomen aufgebaut sind und vorzugsweise 6 bis 30 C-Atome haben,

b) halogenfreie Styrolpolymere mit mittleren Gewichtsmittelmolekulargewichten $\bar{M}w$ zwischen 10 000 und 600 000 und/oder

c) halogenfreie Pfropfpolymere von halogenfreien Monomeren auf halogenfreie Kautschuke, denen ein Kautschuk:Pfropfmonomeren-Gewichtsverhältnis von 93 % : 7 % bis 5 % : 95 %, vorzugsweise von 90 % : 10 % bis 70 % : 30 % und von 50 % : 50 % bis 10 % : 90 % zugrundeliegt,

d) halogenfreie und schwefelfreie Phosphatester der Formel (7),

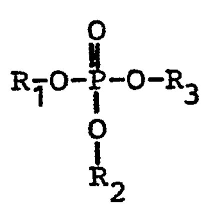 ,

worin $R_1$, $R_2$ und $R_3$ gleich oder verschieden und $C_1$-$C_{20}$-Kohlenwasserstoffreste sind, wobei mindestens zwei der Reste $R_1$, $R_2$ und $R_3$ substituierte oder unsubstituierte Arylreste sind, und gegebenenfalls

e) Tetrafluorethylenpolymerisate enthalten, wobei die Komponente a) in Mengen von 25 bis 95 Gew.-% vorliegt, die Komponente b) in Mengen von 2 bis 74 Gew.-%, vorliegen kann, die Komponente c) in Mengen von 2 bis 74 Gew.-% vorliegen kann, die Komponente d) in Mengen von 1 bis 45 Gew.-%, vorliegt, und die Komponente e) in Mengen von 0 bis 5 Gew.-%, vorliegen kann, wobei die Summe der Komponenten b) + c) mindestens jeweils 4 Gew.-% und die Summe aller Komponente jeweils 100 Gew.-% beträgt.

2. Polymermischungen gemäß Anspruch 1, dadurch gekennzeichnet, daß die Komponente a) in Mengen von 35 bis 90 Gew.-% vorliegt.

3. Polymermischungen gemäß Anspruch 1, dadurch gekennzeichnet, daß die Komponente d) in Mengen von 2,5 bis 30 Gew.-% vorliegt.

4. Polymermischungen gemäß Anspruch 1, dadurch gekennzeichnet, daß die Komponente e) in Mengen von 0,02 bis 2 Gew.-% vorliegt.

5. Polymermischungen gemäß Anspruch 1, dadurch gekennzeichnet, daß die Komponente b) und/oder die Komponente c), jeweils in Mengen von 5 bis 65 Gew.-% vorliegen.

6. Verwendung der Polymermischungen der Ansprüche 1 bis 5 als Flammschutzmittel zur Herstellung von flammwidrig auszurüstenden Gegenständen aus thermoplastischen Kunststoffen.

Europäisches Patentamt

# EUROPÄISCHER RECHERCHENBERICHT

0173869 Nummer der Anmeldung

EP 85 10 9803

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| D,A | EP-A-0 103 230 (BAYER) | | C 08 L 69/00<br>C 08 L 51/00<br>C 08 L 25/04 |
| | --- | | |
| A | EP-A-0 115 885 (STAMICARBON) | | |
| | --- | | |
| A | DE-A-2 918 883 (BAYER) | | |
| | ----- | | |
| | | | RECHERCHIERTE SACHGEBIETE (Int. Cl 4) |
| | | | C 08 L |

Der vorliegende Recherchenbericht wurde für alle Patentansprüche erstellt.

| Recherchenort | Abschlußdatum der Recherche | Prüfer |
|---|---|---|
| DEN HAAG | 02-12-1985 | STIENON P.M.E. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82